# EUROPÄISCHE PATENTSCHRIFT

(11) **EP 1 108 912 B1**
(45) Veröffentlichungstag und Bekanntmachung des Hinweises auf die Patenterteilung: **14.12.2005**
(21) Anmeldenummer: 00890321.3
(22) Anmeldetag: 24.10.2000
(51) Int. Cl.: F16D 25/12, F16D 25/08

(54) **Schaltkupplung**
Clutch
Embrayage

(30) Priorität: 15.12.1999 AT 86999 U
(43) Veröffentlichungstag der Anmeldung: 20.06.2001
(73) Patentinhaber: Horst, Leopold, Ing., 4060 Leonding (AT)
(72) Erfinder: Horst, Leopold, Ing., 4060 Leonding (AT)
(74) Vertreter: Hübscher, Helmut

(56) Entgegenhaltungen:
- WO-A-95/34767
- US-A- 5 398 794

## Beschreibung

Die Erfindung bezieht sich auf eine Schaltkupplung mit zwei zwischen sich eine keilförmige Ringnut bildenden, drehfest auf einer Welle sitzenden Scheiben, von denen eine mittels eines vorzugsweise hydraulischen Schalttriebes axial verstellbar ist, mit einem gegenüber der Welle über einen axialen Stützring gesicherten, äußeren Festlager für den Schalttrieb und mit in die Ringnut eingesetzten, von einer Ringfeder umschlossenen, keilförmigen Kupplungssegmenten, die mit einer sie umschließenden, gegenüber der Welle frei drehbar gelagerten Trommel radial zusammenwirken.

Bei Schaltkupplungen dieser Art siehe WO9534767 (AT 400 614 B) wird durch die axiale Verstellung einer der beiden Scheiben über den hiefür vorgesehenen Schalttrieb die sich zwischen den Scheiben ergebende, keilförmige Ringnut im Querschnitt verringert, so daß die eingesetzten, keilförmigen Kupplungssegmente entlang der kegelförmigen Nutflanken radial nach außen kraftschlüssig gegen die die Scheiben umschließende Trommel gedrückt werden. Die zusammenwirkenden Kupplungsteile werden dabei mechanisch und thermisch beansprucht, was aufgrund der begrenzten Belastbarkeit dieser Kupplungsteile zu einer Leistungsbeschränkung führt, die nur durch die Wahl einer entsprechenden Baugröße überwunden werden kann, wenn nicht für eine zusätzliche Kühlung gesorgt wird. Zu diesem Zweck können die Scheiben mit Lüfterflügeln zum Ansaugen einer Kühlluftströmung für die Kupplungssegmente durch stirnseitige Ansaugöffnungen in der Trommel versehen werden. Trotz dieser Maßnahme bleibt die Temperaturbelastung insbesondere im Bereich der Lager auf der der Trommel abgewandten Kupplungsseite groß, was sich nachteilig auf die Lebensdauer der Wälzlager für die Lagerung des Schalttriebes auf der Welle auswirkt. Es wäre daher eine zusätzliche Kühlung für diese Lager vorteilhaft, doch lassen die axialen Abstände kein zusätzliches Lüfterrad zu, wenn nicht die Länge der Schaltkupplung vergrößert wird, was jedoch unerwünscht ist.

Der Erfindung liegt somit die Aufgabe zugrunde, eine Schaltkupplung der eingangs geschilderten Art mit einfachen konstruktiven Mitteln so auszugestalten, daß die Standzeit insbesondere der Lager für den Schalttrieb erheblich gesteigert werden kann, ohne die Abmessungen der Schaltkupplung vergrößern zu müssen.

Die Erfindung löst die gestellte Aufgabe dadurch, daß der Stützring für das Festlager über seinen Umfang verteilte, radial abstehende Lüfterflügel aufweist.

Diese Maßnahme erfordert keine zusätzlichen Konstruktionsteile für die Lagerbelüftung, weil eben der axiale Stützring für das äußere Festlager, mit dessen Hilfe der Schalttrieb auf der Welle gelagert ist, als Lüfterrad genützt werden kann, wenn über seinen Umfang verteilte, radial abstehende Lüfterflügel vorgesehen werden. Diese Lüfterflügel bedingen keinen über das bestehende Raumangebot hinausgehenden Platzbedarf, so daß trotz der zusätzlichen Lagerbelüftung die Abmessungen der Schaltkupplung beibehalten werden können. Dazu kommt, daß lediglich der ohnehin erforderliche axiale Stützring für das äußere Festlager des Schalttriebes durch einen Stützring mit Lüfterflügeln zu ersetzen ist, was einfachste Konstruktionsverhältnisse mit der Möglichkeit sicherstellt, auch bestehende Schaltkupplungen umrüsten zu können.

Die Lüfterflügel können den jeweiligen Anforderungen entsprechend unterschiedlich ausgebildet sein. Vorteilhafte Konstruktionsverhältnisse ergeben sich beispielsweise dadurch, daß der Stützring einen Flansch mit radialen Schlitzen zur Bildung der Lüfterflügel aufweist. Eine andere Möglichkeit zur Ausbildung eines Lüfterrades durch den axialen Stützring ergibt sich, wenn der Stützring radial angesetzte Lüfterflügel trägt. In beiden Fällen wird für einen zusätzlichen Kühlluftstrom gesorgt, der für eine verbesserte Wärmeabfuhr von den Lagern des Schalttriebes sorgt, so daß für diese Lager ausreichend hohe, an die Lebenserwartung der übrigen Kupplungsteile angeglichene Standzeiten gewährleistet werden können.

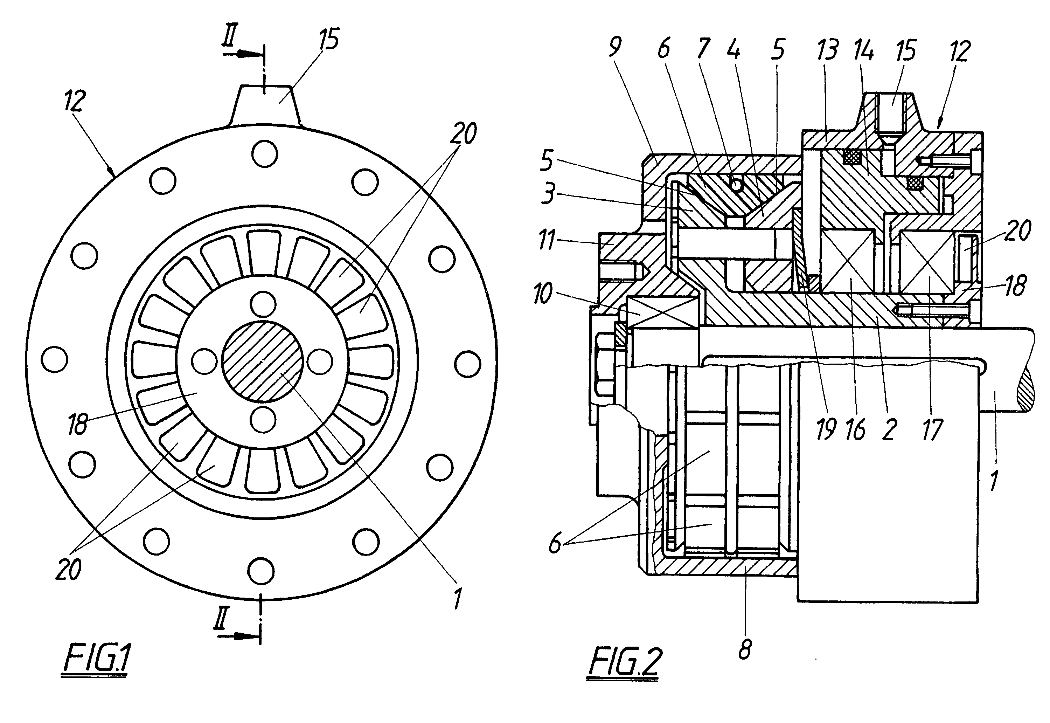

In der Zeichnung ist der Erfindungsgegenstand beispielsweise dargestellt. Es zeigen
- Fig. 1: eine erfindungsgemäße Schaltkupplung in einer stirnseitigen Ansicht auf die Lagerseite des Schalttriebes und
- Fig. 2: diese Schaltkupplung in einem Teilschnitt nach der Linie II-II der Fig. 1.

Die dargestellte Schaltkupplung weist eine beispielsweise von einem Getriebe her antreibbare Welle 1 auf, auf der die Nabe 2 einer Scheibe 3 dreh- und verschiebefest sitzt. Auf der Nabe 2 ist eine weitere Scheibe 4 axial verschiebbar, aber drehfest gelagert. Zwischen den beiden Scheiben 3 und 4 ergibt sich eine keilförmige Ringnut mit kegelförmigen Nutflanken 5 zur Aufnahme keilförmiger Kupplungssegmente 6, die mit Abstand voneinander über den Umfang verteilt angeordnet sind und von einer Ringfeder 7 umschlossen werden. Diese Kupplungssegmente 6 wirken mit dem Mantel 8 einer sie umschließenden Trommel 9 zusammen, die über ein Wälzlager 10 auf der Welle 1 frei drehbar gelagert ist und im Bereich ihrer Stirnwand einen Anschlußflansch 11 für einen über die Schaltkupplung anzutreibenden Konstruktionsteil bildet. Zur Betätigung der Schaltkupplung dient ein Schalttrieb 12, der gemäß dem Ausführungsbeispiel aus einem in einem Zylinder 13 angeordneten, die Welle 1 umschließenden Ringkolben 14 besteht. Die Beaufschlagung des Ringkolbens 14 erfolgt über einen Hydraulikanschluß 15. Da sich der Schalttrieb 12 nicht mit der Welle 1 mitdrehen soll, wird er über Wälzlager 16 und 17 drehbar gegenüber der Welle 1 abgestützt. Während das dem Ringkolben 14 zugeordnete Wälzlager 16 zur Übertragung der Schaltbewegung auf die sich drehende Scheibe 4 axial verstellbar auf der Nabe 2 geführt wird, ist das Wälzlager 17 als Festlager ausgebildet, das durch einen axialen Stützring 18 axial festgelegt wird. Bei einer Beaufschlagung des Schalttriebes 12 wird demnach der Ringkolben 14 entgegen der Kraft einer Rückstellfeder 19 axial verlagert, wobei sich der Zylinder 13 über das Festlager 17 axial am Stützring 18 abstützt. Über die Rückstellfeder 19 wird die Scheibe 4 gegen die Scheibe 3 verschoben, was ein radiales Auswärtswandern der Kupplungssegmente 6 mit der Wirkung zur Folge hat, daß die Trommel 9 kraftschlüssig mitgenommen wird. Bei einer Belüftung des Schalttriebes 12 wird die Scheibe 4 über nicht dargestellte, zwischen den Scheiben 3 und 4 angeordnete Öffnungsfedern in die Ausgangslage zurückgestellt, wobei der Ringkolben 14 über die Rückstellfeder 19 ebenfalls in seine Ausgangsstellung verlagert wird. Gleichzeitig bedingt die Ringfeder 7 das Ablösen der Kupplungssegmente 6 vom Mantel 8 der Trommel 9, womit der Kraftschluß zwischen der Welle 1 und der Trommel 9 unterbrochen ist.

Damit die Wärmebelastung der Lager 16 und 17 beschränkt und damit die Lagerstandzeiten entsprechend hoch gehalten werden können, ist für eine ausreichende Abfuhr der im Bereich der Kupplungssegmente 6 und der mit den Kupplungssegmenten 6 zusammenwirkenden Konstruktionsteile entstehenden Wärme zu sorgen, die bei dieser Art von Kupplungen erheblich sein kann. Zu diesem Zweck werden über den Umfang des Stützringes 18 verteilte, radial abstehende Lüfterflügel 20 vorgesehen, die einen entsprechenden Kühlluftstrom im Lagerbereich bewirken. Diese Lüfterflügel 20 sind nach dem Ausführungsbeispiel radial an den Stützring 18 angesetzt. Es wäre aber auch möglich, den Stützring 18 mit einem entsprechenden Flansch zu versehen, der zur Bildung der Lüfterflügel 20 mit radialen Schlitzen versehen wird. Es kommt ja lediglich darauf an, daß der Stützring 18 entsprechende Lüfterflügel aufweist, um einen ausreichenden Förderluftstrom sicherzustellen. Die Ausbildung des Stützringes 18 als Lüfterrad erlaubt eine zusätzliche Lagerkühlung, ohne hiefür zusätzliche Konstruktionsteile vorsehen zu müssen, die die Abmessungen der Schaltkupplung beeinflussen.

## Patentansprüche

1. Schaltkupplung mit zwei zwischen sich eine keilförmige Ringnut bildenden, drehfest auf einer Welle (1) sitzenden Scheiben (3, 4), von denen eine mittels eines vorzugsweise hydraulischen Schalttriebes (12) axial verstellbar ist, mit einem gegenüber der Welle (1) über einen axialen Stützring (18) gesicherten, äußeren Festlager (17) für den Schalttrieb (12) und mit in die Ringnut eingesetzten, von einer Ringfeder (7) umschlossenen, keilförmigen Kupplungssegmenten (6), die mit einer sie umschließenden, gegenüber der Welle (1) frei drehbar gelagerten Trommel (9) radial zusammenwirken, **dadurch gekennzeichnet, daß** der Stützring (18) für das Festlager (17) über seinen Umfang verteilte, radial abstehende Lüfterflügel (20) aufweist.

2. Schaltkupplung nach Anspruch 1, **dadurch gekennzeichnet, daß** der Stützring (18) einen Flansch mit radialen Schlitzen zur Bildung der Lüfterflügel (20) aufweist.

3. Schaltkupplung nach Anspruch 1, **dadurch gekennzeichnet, daß** der Stützring (18) radial angesetzte Lüfterflügel (20) trägt.

## Claims

1. A clutch with two discs (3, 4) mounted in a rotationally secure manner on a shaft (1) with a wedge-shaped annular groove therebetween, of which one disc can be axially moved by means of a preferably hydraulic switching drive (12), with an outer fixed bearing (17) for the switching drive (12) secured in relation to the shaft (1) by means of an axial support ring (18), and with wedge-shaped clutch segments (6) surrounded by an annular spring (7) and set into the annular groove, said clutch segments (6) radially cooperating with a drum (9) enclosing them and rotating freely in relation to the shaft (1), **characterised in that** the support ring (18) for the fixed bearing (17) has radially projecting fan blades (20) distributed over its circumference.

2. Clutch according to claim 1, **characterised in that** the support ring (18) has a flange with radial slots for the formation of the fan blades (20).

3. Clutch according to claim 1, **characterised in that** the support ring (18) carries radially arranged fan blades (20).

## Revendications

1. Embrayage, comprenant deux disques (3, 4), montés sur un arbre (1) de façon assujettie en rotation, formant entre eux une gorge annulaire cunéiforme, disques dont l'un est réglable axialement au moyen d'un mécanisme de manoeuvre (12), de préférence hydraulique, avec un palier fixe extérieur (17), assuré par rapport à l'arbre (1) par l'intermédiaire d'une bague d'appui (18) axiale, pour le mécanisme de manoeuvre (12), et avec des segments d'embrayage (6) cunéiformes, insérés dans la gorge annulaire, entourés par un ressort annulaire (7), segments coopérant radialement avec un tambour (9), les entourant et monté de façon à pouvoir tourner librement par rapport à l'arbre (1), **caractérisé en ce que** la bague d'appui (18) pour le palier fixe (17) présente des ailettes de ventilateur (20) en saillie radialement, réparties sur sa périphérie.

2. Embrayage selon la revendication 1, **caractérisé en ce que** la bague d'appui (18) présente une bride, ayant des fentes radiales pour former les ailettes de ventilateur (20).

3. Embrayage selon la revendication 1, **caractérisé en ce que** la bague d'appui (18) porte des ailettes de ventilateur (20) réalisées radialement d'un seul tenant.
